# FASCICULE DE BREVET EUROPEEN

(11) **EP 0 574 279 B1**
(45) Date de publication et mention de la délivrance du brevet: **26.03.1997**
(21) Numéro de dépôt: 93401168.5
(22) Date de dépôt: 05.05.1993
(51) Int. Cl.: G05D 11/13, F04F 1/10, B01F 3/08, G01F 3/36

(54) **Procédé de mesure et de contrôle d'un débit instantané d'un additif liquide délivré par une pompe**
Mess- und Regelverfahren für den von einer Pumpe augenblicklich bereitgestellten Volumenstrom eines flüssigen Zusatzmediums
Measurement and control procedure for the instantaneous flow of a liquid additive delivered by a pump

(30) Priorité: 15.05.1992 FR 9206024
(43) Date de publication de la demande: 15.12.1993
(73) Titulaire: INSTITUT FRANCAIS DU PETROLE, 92502 Rueil-Malmaison (FR)
(72) Inventeur: Gonzalez, Pierre, F-92500 Rueil Malmaison (FR); Grehier, Alain, F-75012 Paris (FR); Guillory, Alain, F-78530 Buc (FR); Poussin, Bernard, F-78420 Carrieres Sur Seine (FR)

(56) Documents cités:
- EP-A- 0 017 308
- WO-A-80/01937
- FR-A- 2 411 985
- FR-A- 2 511 093
- US-A- 4 718 443
- US-A- 5 046 925

## Description

L'invention concerne un procédé et un dispositif de pompage comprenant le contrôle et la mesure de débit instantané en continu d'un additif liquide destiné à être introduit dans un conduit, dans un réacteur chimique ou dans une capacité.

Elle s'applique tout particulièrement à l'injection d'une quantité d'eau ou de produits chimiques tels que des anti-moussants, des déodorisants, des anti-oxydants, du tétrachlorure de carbone, ou du diméthyldisulfure. Elle peut s'appliquer aussi à l'injection de produits en continu et à très faibles débits dans un réacteur ou une capacité mettant en oeuvre des micro-organismes.

Ces produits appelés additifs dans la suite de la description doivent être injectés de manière continue, très souvent sous de très faibles débits, et le principal problème est lié à la fiabilité de l'opération.

L'art antérieur est illustré par les brevets US A-4718443, US A-5046925, WO A-8001937 et EP A-0017308.

Il est connu cependant dans l'art antérieur de délivrer des volumes calibrés de fluides (FR 2511093) sous un débit moyen mais aucun ne suggère ou ne décrit, à notre connaissance, un dispositif permettant de délivrer à chaque instant un débit réel de fluide, véritablement contrôlé.

Par ailleurs, l'additif peut être injecté dans un conduit sous pression ou dans un réacteur sous pression (par exemple de 5 MPa) qui peut subir des fluctuations de débit, minimes par exemple ou liées à des variations de conditions opératoires, mais qui peuvent être préjudiciables au bon déroulement du dosage à réaliser, le débit délivré pourrait être substantiellement affecté surtout au niveau des faibles valeurs de débit.

Par ailleurs, selon l'art antérieur, les pertes de charge généralement importantes en aval de la pompe, dues par exemple à la présence de restrictions ou de clapets entraînent des risques de colmatage préjudiciables au bon écoulement du fluide et au bon fonctionnement de ces clapets.

Enfin, le brevet FR 2411985 décrit une pompe à débit asservi fonctionnant à pression constante, comprenant un réservoir pressurisé de petite dimension qui peut-être rempli sans interruption de débit mais il ignore l'asservissement du débit de la pompe à la variation de pression ou de tout autre facteur susceptible d'altérer l'écoulement de l'additif notamment à faible débit et en continu dans un conduit contenant le fluide process et donc ce procédé ne permet pas d'opérer à des pressions variables et de contrôler en continu le débit instantané d'additif véritablement délivré par la pompe compte tenu de ces variations de pression.

L'objet de l'invention est de remédier aux inconvénients mentionnés ci-avant.

De manière plus précise l'invention concerne un procédé de contrôle et de mesure d'un débit instantané d'un additif liquide délivré par une pompe et que l'on injecte dans un fluide dit fluide process selon lequel on introduit dans au moins un réservoir (7) de ladite pompe, de préférence de forme allongée, ledit additif et on applique une pression appropriée d'un gaz et/ou d'un liquide moteur sur ledit additif à une extrémité du réservoir, telle que l'on évacue à l'autre extrémité l'additif pour le mélanger au fluide process ; le procédé comprend les étapes suivantes :
a) on régule à chaque instant un débit de gaz et/ou de liquide par un moyen de régulation de débit (1) disposé en amont du réservoir (7),
b) on mesure à chaque instant un volume dans le réservoir (7) contenant l'additif ;
c) on détermine à chaque instant par des moyens (28) de traitement, de contrôle et de commande le débit d'additif délivré et on compare le débit d'additif ainsi calculé à une valeur de consigne de débit préalablement enregistrée ; et
d) on envoie par lesdits moyens de traitement, de contrôle et de commande un signal permettant d'agir sur le moyen (1) de régulation de débit du gaz et/ou de liquide de façon à délivrer à chaque instant l'additif à un débit sensiblement identique à celui correspondant à la valeur de consigne.

De manière plus précise, la pression du fluide process dans le conduit ou dans le réacteur où s'effectuent l'injection et le mélange, étant habituellement sous une pression de 0,01 à 20 MPa et plus particulièrement de 1 à 5 MPa et étant par ailleurs susceptible de fluctuer, on mesure cette pression à tout instant et on peut asservir, de préférence avant les étapes a à d, le moyen de régulation de débit à la mesure de pression du fluide process. De préférence on peut l'asservir de façon que la pression, dans le réservoir en position de vidage, soit supérieure d'au moins 1 Pa et de préférence supérieure d'une valeur comprise entre 10 Pa et 10⁴ Pa, à la pression dudit fluide que l'on mesure à tout instant. Le choix de la pression appliquée est fonction du diamètre et de la longueur de la tuyauterie en aval de la pompe.

Pour mesurer le volume dans le réservoir, diverses technologies peuvent être utilisées. Généralement, ce sont des dispositifs mesurant des différences de niveau qui mettent en oeuvre, par exemple les méthodes suivantes :
- méthodes hydrostatiques, qui utilisent les propriétés hydrostatiques des liquides. On peut citer les dispositifs à flotteur, à plongeur, à palpeur ou manométriques.
- méthodes électriques, qui utilisent les propriétés électriques des liquides. On peut citer les dispositifs à conductivité ou capacitifs.
- méthodes calorifiques pour les dispositifs à thermistance.
- méthodes utilisant des rayonnements gamma, des ultrasons, des hyperfréquences.

Les avantages par rapport à l'art antérieur sont les suivants :

Le dispositif selon l'invention ne présente généralement pas de pertes de charge par adjonction de capillaire ou de restriction par exemple, en aval du système de pompage, ce qui évite les phénomènes de bouchage et/ou d'encrassement des canalisations.
D'autres part par rapport au système de pompes alternatives le dispositif selon l'invention ne comporte pas de clapets, souvent rendus inopérants par la présence de dépôts ou d'encrassements.
De plus, il présente une facilité de mise en oeuvre et une fiabilité compatibles avec les exigences industrielles.

Le signal envoyé vers le moyen de régulation de débit peut être un signal électrique ou un signal véhiculé par une télécommande (voie hertzienne).

Selon une caractéristique du procédé, on peut appliquer la pression appropriée dans le réservoir contenant l'additif par l'intermédiaire d'un gaz sensiblement insoluble dans l'additif et on envoie en règle générale le signal électrique vers un moyen de régulation de débit du gaz. Par gaz sensiblement insoluble, on entend un gaz dont la solubilité à la température ambiante et à la pression atmosphérique est sensiblement inférieure par exemple à 3 000 ppm et de préférence inférieure à 1 000 ppm.

Le gaz choisi, sensiblement inerte vis-à-vis de l'additif, est généralement dépendant du type d'additif injecté. C'est ainsi, par exemple, qu'il est avantageusement recommandé d'utiliser de l'air pour une injection d'eau, de l'hydrogène pour une injection d'hydrocarbures ou de l'azote pour l'injection d'un anti-oxydant. On peut utiliser également des gaz sous pression disponibles dans les unités de raffinage (H₂, coupe LPG par exemple) ou sur les sites de production de pétrole ou de gaz. Selon une autre caractéristique du procédé, on peut appliquer la pression appropriée dans le réservoir contenant l'additif par l'intermédiaire d'un liquide moteur moins dense que l'additif et sensiblement non miscible dans celui-ci et on envoie habituellement le signal délivré par les moyens de traitement, de contrôle et de commande vers un moyen de régulation de débit dudit liquide. Par liquide sensiblement non miscible dans l'additif, on entend un liquide susceptible d'être dissous dans l'additif à raison de moins de 3 000 ppm par exemple (exprimé en poids). Le liquide moteur sera généralement choisi en fonction du type d'additif injecté et sa densité sera en règle générale inférieure d'au moins 10 % à celle de l'additif. On peut avantageusement utiliser une huile hydrocarbonée dans le cas de l'injection d'un additif aqueux.

Selon une autre caractéristique du procédé, on peut appliquer la pression appropriée par l'intermédiaire d'un gaz moteur exerçant une pression sur un liquide intermédiaire jouant le rôle de joint, sensiblement non miscible dans l'additif et moins dense que celui-ci, le gaz moteur étant sensiblement insoluble dans le liquide intermédiaire.

Selon une caractéristique préférée de l'invention, la pompe contient deux réservoirs, un étant en position de remplissage au moins partiel en additif pendant que l'autre est en position de vidage et d'opération de contrôle et de mesure de débit d'additif délivré. Cette solution technique permet d'utiliser des réservoirs généralement sous pression de faible capacité, ce qui réduit leur coût.

Selon une autre caractéristique du procédé on peut effectuer le remplissage au moins partiel en additif de l'un des réservoirs et on peut équilibrer les pressions dans les réservoirs par mise en communication des réservoirs avec le conduit d'alimentation en gaz moteur ou en liquide moteur à débit régulé avant d'effectuer le vidage du réservoir au moins en partie rempli.

Le procédé s'applique à des pompes susceptibles de contrôler et de mesurer en continu des débits instantanés d'additif d'au moins 1 ml par heure, par exemple de 1 ml/heure à 50 dm³ par heure, c'est à dire notamment des faibles débits.

L'additif est généralement injecté dans le fluide dit fluide process qui s'écoule dans un conduit ou dans un réacteur chimique ou bien injecté dans un fluide qui est statique dans une capacité ou dans un réacteur chimique.

L'invention concerne aussi le dispositif pour la mise en oeuvre du procédé. Plus spécialement, elle concerne un dispositif de pompage avec contrôle et mesure de débit instantané, comprenant une alimentation, (24) en additif, au moins un réservoir (7) relié à ladite alimentation adapté à être mis sous pression, des moyens de mise en oeuvre d'une pression adéquate à l'une des extrémités du réservoir comprenant une alimentation en fluide moteur (17) sous pression et des moyens d'évacuation (20,3) de l'additif à l'autre extrémité du réservoir vers un conduit (23), un réacteur chimique ou une capacité contenant un fluide process, le dispositif comprenant en combinaison un moyen de régulation (1) du débit du fluide moteur disposé en amont du réservoir et délivrant la pression adéquate à l'une des extrémités du réservoir, un moyen de mesure (6) instantané de volume d'additif dans le réservoir (7), des moyens (28) de contrôle, de traitement des informations et de commande connectés au moyen de mesure du volume et adaptés à délivrer un signal asservissant le moyen de régulation de débit du fluide moteur au moyen de mesure instantané du volume d'additif.

Selon une caractéristique du dispositif, celui-ci peut comprendre au moins deux réservoirs alimentés en parallèle et adaptés à être reliés entre eux. Ils peuvent comporter en outre des moyens d'équilibrage de pression des réservoirs reliés au moyen de régulation du débit de fluide moteur.

Selon une première variante illustrant un mode de mise en oeuvre du procédé, le dispositif peut comprendre des moyens de mesure de la pression du fluide process dans le conduit, le réacteur chimique ou la capacité, des moyens d'asservissement et une vanne de régulation de pression située entre l'alimentation en fluide moteur et le moyen de régulation de débit, ladite vanne de régulation de pression étant asservie par les moyens d'asservissement aux moyens de mesure de la pression du fluide process.

Selon une seconde variante du dispositif, celui-ci peut comprendre des moyens de mesure de la pression du fluide process dans le conduit, le réacteur chimique ou la capacité et des moyens d'asservissement d'une vanne de régulation de débit aux moyens de mesure de la pression du fluide process, ladite vanne de régulation étant avantageusement une vanne de régulation et de contrôle de débit massique.

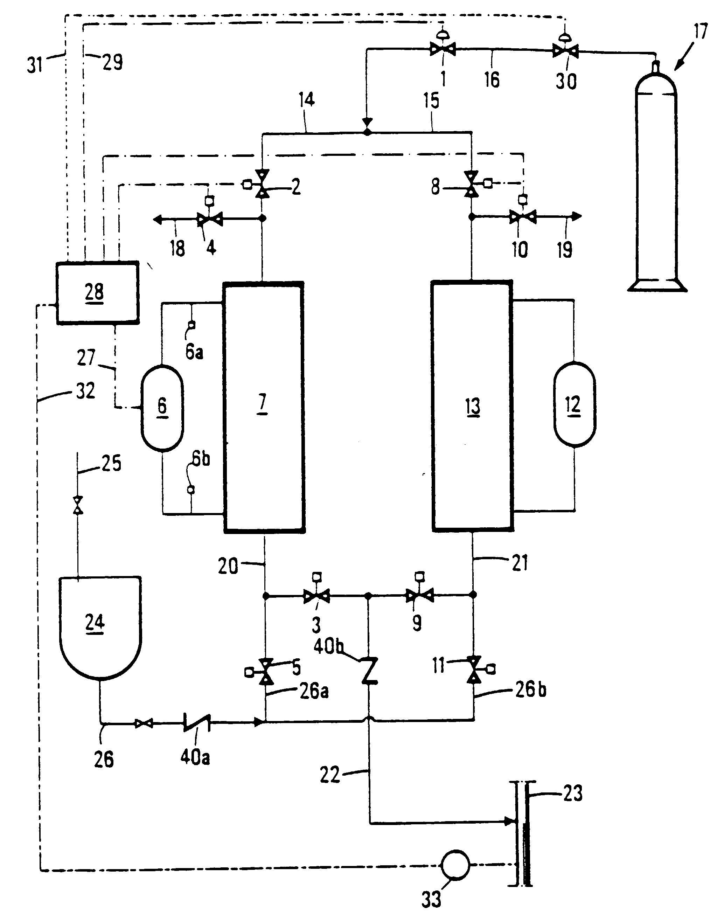

L'invention sera mieux comprise au vu de la figure unique illustrant de manière schématique un exemple de réalisation nullement limitatif.

Le dispositif comprend par exemple deux réservoirs calibrés verticaux 7, 13, sensiblement cylindriques. Un bac de stockage 24 envoie, par gravité, ou par une légère pression gazeuse apportée par une ligne 25, un additif liquide à l'extrémité inférieure des réservoirs 7 et 13 par des lignes d'alimentation en parallèle 26, 26 a et 20 et 26, 26 b et 21 contrôlées respectivement par des vannes d'ouverture ou de fermeture 5 et 11. Une vanne anti-retour 40a sur la ligne 26 assure la sécurité au niveau de leur extrémité. Ces réservoirs 7 et 13 reçoivent une alimentation en parallèle en un gaz moteur, de l'air par exemple provenant d'un stockage 17 et amené par des lignes 16, 14 et 16, 15 sur lesquelles sont disposées respectivement des vannes d'ouvertures ou de fermeture 2 et 8.

Un régulateur de débit massique 1 (Brooks, par exemple) sur la ligne 16 contrôle le débit du gaz moteur. L'additif sous l'influence de la pression du gaz moteur est récupéré à la partie inférieure des réservoirs par la ligne 20 ou 21 qui le véhicule grâce aux vannes 3 ou 9 et la vanne anti-retour 40b vers une ligne 22 et un conduit 23 où circule sous pression un fluide dit fluide process dans lequel cet additif est injecté et mélangé.

L'opération de livraison d'additif en continu à débit instantané contrôlé s'effectue par exemple à partir d'un seul réservoir. Par exemple le stockage 17 envoie le gaz moteur sous contrôle du régulateur de débit massique 1 dans la ligne 14 qui alimente le réservoir 7 rempli au moins en partie d'additif et l'additif est délivré par les lignes 20 et 22 au conduit de fluide process 23. Généralement, pendant au moins une partie du temps de vidage, le bac de stockage 24 alimente l'autre réservoir 13 en additif par les lignes 26, 26 b et 21.

Le contrôle et la mesure de débit instantané sont réalisés de la façon suivante :

Une différence de niveau d'additif délivré durant une période de temps déterminée, dans le réservoir 7 est mesurée grâce à des capteurs de pression différentielle ou une sonde capacitive 6, 6a, 6b (12 lorsque le réservoir 13 est en position de vidage) qui envoient une information par exemple par une ligne électrique 27, à une unité 28 de traitement, de contrôle et de commande qui, après comparaison avec une référence déterminée en fonction de la pression et des variations de pression du fluide process, envoie un signal par exemple par une ligne 29 électrique, asservissant le régulateur de débit massique 1 à la différence de niveau et donc au débit d'additif délivré au fluide process par le réservoir 7. Il en est de même avec le réservoir 13 lorsque celui-ci est en position de vidage, dont les capteurs sont reliés à l'unité 28 qui commande le régulateur de débit 1.

Pour contrôler et réguler dans les meilleures conditions le débit instantané d'additif délivré au fluide process dans le conduit 23, des capteurs de pression 33 disposés sur le conduit 23 mesurent en permanence la pression et les signaux émis sont transmis à l'unité 28 de traitement, de contrôle et de commande par une ligne de transmission 32. Les informations reçues et traitées sont prises en compte pour asservir la vanne de régulation 1 à la mesure de la variation de pression dans le conduit.

Selon une autre variante illustrée par la figure, à partir des informations données par le capteur de pression et traitées par l'unité 28 de contrôle, celle-ci émet des signaux transmis par une ligne 31 à une vanne de détente 30, disposée sur le conduit 16. Cette vanne est située en amont d'une vanne de régulation représentée par la référence 1, pour amener la pression en amont de la vanne de régulation à environ 10⁴ Pa, par exemple, au-dessus de la pression du conduit 23. La vanne de régulation 1 est asservie par la ligne 29 et par l'unité de commande 28, comme dans le cas précédent.

En se reportant à la figure, on peut aisément comprendre les séquences de fonctionnement du dispositif. Dès que le réservoir 13 a été vidé de son contenu, le réservoir 7 est en position d'injection. L'additif est introduit par le bas du réservoir 13, les vannes 5, 8 et 9 étant fermées et la vanne 11 et une vanne 10 installée sur une ligne de dégazage 19 étant ouvertes. Le niveau de remplissage du réservoir 13 est arrêté à une valeur préalablement fixée à l'unité 28 de commande. On ferme alors les vannes 11 et 10. Lorsque l'additif dans le réservoir 7 atteint un niveau bas préalablement fixé par l'unité de commande, on ouvre d'abord la vanne 8, ce qui permet de recomprimer la tête du réservoir 13, d'équilibrer sa pression avec celle du gaz moteur délivré par la ligne 16 et la vanne 1 et assurer un débit continu en ouvrant la vanne 9 et en fermant la vanne 3 au même instant. On ferme ensuite la vanne 2 et le réservoir 7 peut être à nouveau rempli comme il est décrit ci-avant. Toutes ces séquences d'ouverture et de fermeture de vannes de remplissage et de vidage alterné des réservoirs sont commandées par l'unité de commande 28.

Le contrôle et la mesure en continu de débit d'additif introduit dans le conduit de gaz process est réalisé de la façon suivante:

Une différence de niveau hydrostatique (fonction des pressions en amont et en aval du réservoir) est mesurée à chaque instant dans le réservoir 7 par les capteurs 6a et 6b. A cette mesure de différence de niveau correspond un volume délivré pendant une période de temps déterminée par l'unité de commande et donc un débit instantané véritablement injecté. Cette mesure de débit est comparée à une valeur de débit dite de consigne préalablement enregistrée dans l'unité de commande et de contrôle 28 qui délivre un signal permettant de plus ou moins ouvrir le régulateur 1 de débit massique de gaz moteur.

## Revendications

1. Procédé de contrôle et de mesure d'un débit instantané d'un additif liquide délivré par une pompe et que l'on injecte dans un fluide dit fluide process selon lequel on introduit dans au moins un réservoir (7) de ladite pompe, ledit additif et on applique une pression appropriée d'un gaz ou d'un liquide moteur sur ledit additif à une extrémité du réservoir, telle que l'on évacue à l'autre extrémité l'additif pour le mélanger au fluide process ; le procédé comportant les étapes suivantes :
a) on régule à chaque instant un débit de gaz et/ou de liquide par un moyen de régulation de débit (1) disposé en amont du réservoir (7),
b) on mesure à chaque instant un volume dans le réservoir (7) contenant l'additif ;
c) on détermine à chaque instant par des moyens (28) de traitement, de contrôle et de commande le débit d'additif délivré et on compare le débit d'additif ainsi calculé à une valeur de consigne de débit préalablement enregistrée ; et
d) on envoie par lesdits moyens de traitement, de contrôle et de commande un signal permettant d'agir sur le moyen (1) de régulation de débit du gaz et/ou de liquide de façon à délivrer à chaque instant l'additif à un débit sensiblement identique à celui correspondant à la valeur de consigne;
le procédé étant caractérisé en ce que on mesure à tout instant la pression du fluide process et on asservit le moyen de régulation de débit de gaz et/ou de liquide à la mesure de pression du fluide process.

2. Procédé selon la revendication 1 dans lequel on applique la pression appropriée sur l'additif par l'intermédiaire d'un gaz moteur sensiblement insoluble dans l'additif ou d'un liquide moteur sensiblement non miscible et moins dense que l'additif.

3. Procédé selon la revendication 1, dans lequel on applique la pression appropriée par l'intermédiaire d'un gaz moteur exerçant une pression sur un liquide intermédiaire servant de joint, sensiblement non miscible dans l'additif et moins dense que l'additif, ledit gaz moteur étant sensiblement insoluble dans le liquide intermédiaire.

4. Procédé selon l'une des revendications 1 à 3, dans lequel la pompe contient au moins deux réservoirs, l'un étant en position de remplissage au moins partiel en additif pendant que l'autre est en position de vidage et d'opération de contrôle et de mesure de débit d'additif délivré.

5. Procédé selon l'une des revendications 1 à 4 dans lequel on asservit le moyen de régulation de façon que la pression dans le réservoir en position de vidage soit supérieure d'au moins 1 Pa à la pression dudit fluide.

6. Procédé selon l'une des revendications 1 à 5 dans lequel on contrôle et on mesure des débits instantanés d'additif d'au moins 1 ml/heure.

7. Procédé selon l'une des revendications 1 à 6 dans lequel le fluide process s'écoule dans un conduit ou dans un réacteur chimique ou dans une capacité.

8. Procédé selon l'une des revendications 4 à 7 dans lequel on effectue le remplissage au moins partiel en additif de l'un des réservoirs et on équilibre les pressions dans les réservoirs par la mise en communication des réservoirs avec l'alimentation en gaz ou en liquide moteur à débit régulé avant d'effectuer le vidage du réservoir rempli.

9. Dispositif de pompage avec contrôle et mesure de débit instantané, comprenant en combinaison une alimentation (24) en additif, au moins un réservoir (7) relié à ladite alimentation adapté à être mis sous pression, des moyens de mise en oeuvre d'une pression adéquate à l'une des extrémités du réservoir comprenant une alimentation en fluide moteur (17) sous pression et des moyens d'évacuation (20,3) de l'additif à l'autre extrémité du réservoir vers un conduit (23), un réacteur chimique ou une capacité contenant un fluide process, le dispositif comportant en outre un moyen de régulation (1) du débit du fluide moteur disposé en amont du réservoir et délivrant la pression adéquate à l'une des extrémités du réservoir, un moyen de mesure (6) instantané de volume d'additif dans le réservoir (7), des moyens (28) de contrôle, de traitement des informations et de commande connectés au moyen de mesure du volume et adaptés à délivrer un signal asservissant le moyen de régulation de débit du fluide moteur au moyen de mesure instantané du volume d'additif, le dispositif étant caractérisé en ce qu'il comprend en outre des moyens (32,33) de mesure de la pression du fluide process dans le conduit, le réacteur chimique ou la capacité (23) et des moyens d'asservissement (28) du moyen (1) de régulation de débit aux moyens de mesure (32,33) de la pression du fluide process.

10. Dispositif selon la revendication 9 comprenant au moins deux réservoirs adaptés à être reliés entre eux, caractérisé en ce qu'il comporte des moyens d'équilibrage de pression des réservoirs reliés au moyen de régulation du débit de fluide moteur.

11. Dispositif selon la revendication 9, dans lequel le moyen de régulation de débit est une vanne de régulation et de contrôle de débit massique.

12. Dispositif selon l'une des revendications 9 à 11, dans lequel une vanne (30) de régulation de pression est située entre l'alimentation en fluide moteur et le moyen de régulation de débit..

## Patentansprüche

1. Verfahren zum Regeln und Messen eines momentanen Durchsatzes eines flüssigen durch eine Pumpe gelieferten Additivs, welches man in ein Fluid, das sogenannte Prozeßfluid, injiziert, wobei man in wenigstens einen Speicher (7) dieser Pumpe dieses Additiv einführt und einen geeigneten Druck eines Gases oder einer Antriebsflüssigkeit auf dieses Additiv an einem Ende des Speichers ausübt, derart, daß man am anderen Ende das Additiv, um es mit dem Prozeßfluid zu mischen, abzieht; wobei das Verfahren die folgenden Stufen umfaßt:
a) man steuert in jedem Augenblick einen Gas- und/oder Flüssigkeitsdurchsatz über ein Durchsatzsteuermittel (1), das vor dem Speicher (7) angeordnet ist,
b) man mißt in jedem Augenblick ein Volumen in dem das Additiv enthaltenden Speicher (7);
c) man bestimmt in jedem Augenblick über Verarbeitungsregel und Steuermittel (28) die gelieferte Additivmenge und man vergleicht die so berechnete Additivmenge mit einem Durchsatzsollwert, der vorher aufgezeichnet wurde; und
d) man schickt über Verarbeitungsregel und Steuermittel ein Signal, das es ermöglicht, auf das Durchsatzsteuermittel (1) für das Gas und/oder Flüssigkeit einzuwirken, derart, daß in jedem Augenblick das Additiv bei einer Menge im wesentlichen entsprechend dem dem Sollwert entsprechenden geliefert wird, wobei das Verfahren sich dadurch auszeichnet, daß man in jedem Augenblick den Druck des Prozeßfluids mißt und man das Gas- und/oder Flüssigkeitsdurchsatzsteuermittel der Druck messung des Prozeßfluids unterwirft.

2. Verfahren nach Anspruch 1, bei dem man den geeigneten Druck auf das Additiv vermittels eines Antriebsgases ausübt, das im wesentlichen im Additiv unlöslich ist oder vermittels einer Antriebsflüssigkeit, die im wesentlichen nicht mischbar und weniger dicht als das Additiv ist.

3. Verfahren nach Anspruch 1, bei dem man den geeigneten Druck vermittels eines Antriebsgases aufbringt, der einen Druck auf eine Zwischenflüssigkeit ausübt, die als Dichtung oder Verbindung wirkt und im wesentlichen im Additiv nicht mischbar und weniger dicht als das Additiv ist, wobei das Antriebsgas in der Zwischenflüssigkeit im wesentlich unlöslich ist.

4. Verfahren nach einem der Ansprüche 1 bis 3, bei dem die Pumpe wenigstens zwei Speicher enthält, von denen der eine sich in wenigstens teilweiser Füllstellung mit Additiv befindet, während der andere sich in Entleerungs- und Regel- sowie Meßbetätigungsstellung für den Durchsatz des gelieferten Additivs befindet.

5. Verfahren nach einem der Ansprüche 1 bis 4, bei dem man das Steuermittel derart abhängig macht, daß der Druck im Speicher in Entleerungsstellung um wenigstens 1 Pa größer als der Druck dieses Fluides wird.

6. Verfahren nach einem der Ansprüche 1 bis 5, bei dem man momentane Additivdurchsätze von wenigstens 1 ml/Stunde regelt und mißt.

7. Verfahren nach einem der Ansprüche 1 bis 6, bei dem das Prozeßfluid in einer Leitung oder einem chemischen Reaktor oder in einem Speicher strömt.

8. Verfahren nach einem der Ansprüche 4 bis 7, bei dem man die wenigstens teilweise Füllung mit Additiv eines der Speicher durchführt und man die Drücke in den Speichern ausgleicht, indem man Speicher mit der Speisung für Antriebsgas oder Antriebsfluid bei gesteuertem Durchsatz in Verbindung setzt, bevor die Entleerung des gefüllten Speichers vorgenommen wird.

9. Pumpvorrichtung mit Regelung und Messung des momentanen Durchsatzes, in Kombination umfassend: eine Speisung (24) mit Additiv, wenigstens einen Speicher (7), der mit dieser Speisung verbunden ist und unter Druck gesetzt werden kann, Vorrichtungen zur adäquaten Unterdrucksetzung eines der Enden des Speichers, eine Speisung mit Antriebsfluid (17) unter Druck und Abzugsmittel (20, 3) des Additivs am anderen Ende des Speichers zu einer Leitung (23) umfassend, einen chemischen Reaktor oder einen ein Prozeßfluid enthaltenden Speicher, wobei die Vorrichtung im übrigen ein Steuermittel (1) für den Antriebsfluiddurchsatz umfaßt, der vor dem Speicher angeordnet ist und den adäquaten Druck an eines der Enden des Speichers liefert, ein Mittel (6) für momentane Messung des Additivvolumens im Speicher (7), Mittel (28) zum Regeln, Verarbeiten von Informationen und Steuerung, die mit dem Meßmittel für das Volumen verbunden und so ausgelegt sind, daß sie ein Signal liefern, das das Steuermittel für den Antriebsfluiddurchsatz dem momentanen Meßmittel des Additivvolumens unterwirft, dadurch gekennzeichnet, daß sie im übrigen Mittel (32, 33) zur Messung des Prozeßfluiddrucks in der Leitung, dem chemischen Reaktor oder dem Speicher (23) sowie Steuermittel (28) des Durchsatzsteuermittels (1) umfaßt, die den Meßmitteln (32, 33) des Drucks des Prozeßfluides ausgesetzt sind.

10. Vorrichtung nach Anspruch 9, wenigstens zwei Speicher umfassend, einer Auslegung, daß sie miteinander verbindbar sind, dadurch gekennzeichnet, daß sie Mittel zum Ausgleich des Drucks der Speicher umfaßt, die mit dem Steuermittel für den Durchsatz des Antriebsfluids verbunden sind.

11. Vorrichtung nach Anspruch 9, bei dem das Durchsatzsteuermittel ein Steuer- und Regelventil für den Massendurchsatz ist.

12. Vorrichtung nach einem der Ansprüche 9 bis 11, bei dem ein Drucksteuerventil zwischen der Antriebsfluidspeisung und dem Durchsatzsteuermittel angeordnet ist.

## Claims

1. A process for controlling and measuring a continuous flow of a liquid additive delivered by a pump and injected into a fluid termed a process fluid, in which said additive is introduced into at least one reservoir (7) of said pump and a suitable pressure of a driving gas or liquid is applied to said additive at one extremity of the reservoir such that the additive is evacuated from the other extremity for mixing with the process fluid; the process comprising the following steps:
a) continuously regulating a gas and/or liquid flow using a flow regulation means (1) disposed upstream of the reservoir (7);
b) continuously measuring a volume in reservoir (7) which contains the additive;
c) continuously determining the flow of the delivered additive using processing, monitoring and command means (28) and comparing the additive flow so calculated with a pre-registered reference value; and
d) sending a signal via said processing, monitoring and command means which acts on the gas and/or liquid flow rate regulation means so as to continuously supply the additive at a flow rate which is substantially identical to that of the reference value;
the process being characterized in that the pressure of the process fluid is continuously measured and the gas and/or liquid flow regulation means is controlled as a function of the pressure of the process fluid.

2. A process according to claim 1, in which the suitable pressure is applied to the additive via a driving gas which is substantially insoluble in the additive or a driving liquid which is substantially non miscible with and less dense than the additive.

3. A process according to claim 1, in which the suitable pressure is applied via a driving gas which exerts a pressure on an intermediate liquid which acts as a seal and which is substantially non miscible with and less dense than the additive, said driving gas being substantially insoluble in the intermediate liquid.

4. A process according to any one of claims 1 to 3, in which the pump contains at least two reservoirs, one filling up at least partially with additive while the other is emptying and monitoring and measuring the flow of the delivered additive.

5. A process according to any one of claims 1 to 4, in which the regulation means is controlled such that the pressure in the reservoir when emptying is greater than the pressure of said fluid by at least 1 Pa.

6. A process according to any one of claims 1 to 5, in which continuous additive flow rates of at least 1 ml/hour are monitored and measured.

7. A process according to any one of claims 1 to 6, in which the process fluid flows in a conduit or in a chemical reactor or in a volume.

8. A process according to any one of claims 4 to 7, in which one of the reservoirs is at least partially filled and the pressures in the reservoirs are equilibrated by placing the reservoirs in communication with the regulated flow rate driving gas or liquid supply before emptying the filled reservoir.

9. A pumping apparatus for controlling and measuring continuous flow comprising, in combination, an additive supply (24), at least one reservoir (7) connected to said supply which can be placed under pressure, means for producing a suitable pressure at one extremity of the reservoir comprising a supply for a pressurised driving fluid (17) and means (20, 3) at the other extremity of the reservoir for evacuating the additive to a conduit (23), a chemical reactor or a volume containing a process fluid, the apparatus further comprising a means (1) for regulating the flow rate of the driving fluid disposed upstream of the reservoir and supplying said suitable pressure to one of the extremities of the reservoir, means (6) for continuously measuring the volume of the additive in the reservoir (7), monitoring, data processing and command means (28) connected to the volume measuring means and adapted to deliver a signal which controls the driving fluid regulation means by means of the continuous additive volume measuring means, the apparatus being characterized in that it further comprises means (32, 33) for measuring the pressure of the process fluid in the conduit, chemical reactor or volume (23) and means (28) for controlling the flow rate regulation means (1) as a function of the measurement of the process fluid pressure measuring means (32, 33).

10. An apparatus according to claim 9, comprising at least two reservoirs which can be connected together, characterized in that it comprises means for equilibrating the pressure of the reservoirs connected to the driving fluid flow rate regulation means.

11. An apparatus according to claim 9, in which the flow rate regulation means is a valve which regulates and controls the mass flow rate.

12. An apparatus according to any one of claims 9 to 11, in which a pressure regulating valve (30) is located between the driving fluid supply and the flow rate regulation means.
